# EUROPEAN PATENT APPLICATION

(11) **EP 3 952 142 A1**
(43) Date of publication of application: **09.02.2022**
(21) Application number: 19920740.8
(22) Date of filing: 25.11.2019
(51) Int. Cl.: H04B 10/294, H01S 3/10, H04J 14/02

(54) **OPTICAL EQUALIZER, METHOD, AND NON-TRANSITORY COMPUTER-READABLE MEDIUM**

(30) Priority: 25.03.2019 JP 2019056829
(71) Applicant: NEC Corporation, 108-8001 Tokyo (JP)
(72) Inventor: INADA Koji, Tokyo 108-8001 (JP)
(74) Representative: Vossius & Partner Patentanwälte Rechtsanwälte mbB
(86) International application number: PCT/JP2019/045954
(87) International publication number: WO 2020/194860

(57) **Abstract**

Provided are an optical equalizer, a method, and a program which are configured to be capable of flattening a tilt characteristic of a wavelength division multiplexed optical signal with a simple configuration. The optical equalizer (11) includes a detection unit (111) configured to detect a tilt characteristic on the basis of intensities of at least two optical signals among a plurality of optical signals multiplexed into a wavelength division multiplexed optical signal, an optical attenuation unit (112) configured to attenuate an intensity of the wavelength division multiplexed optical signal by an optical attenuation amount, and an optical amplification unit (113) configured to amplify the attenuated wavelength division multiplexed optical signal on the basis of a gain characteristic associated with an intensity of the attenuated wavelength division multiplexed optical signal. In the optical equalizer (11), the optical attenuation amount is controlled based on the tilt characteristic and the gain characteristic.

## Description

### Technical Field

The present disclosure relates to optical equalizers, methods, and programs, and particularly relates to an optical equalizer, a method, and a program which are configured to be capable of flattening the tilt characteristic of a wavelength division multiplexed optical signal with a simple configuration.

### Background Art

In an optical submarine cable system using a wavelength division multiplexed optical signal, flattening of the tilt characteristic (tilt) of a wavelength division multiplexed optical signal is preferred for securing transmission performance. The tilt characteristic represents a difference between the intensities of a plurality of optical signals multiplexed into the wavelength division multiplexed optical signal. A state in which the tilt characteristic is flat the state of a small difference between the intensities the optical signals multiplexed into the wavelength division multiplexed optical signal.

Patent Literature 1 discloses a technology of flattening the tilt characteristic of a wavelength division multiplexed optical signal by controlling the output of excitation light input into an optical amplifier after detection of the tilt characteristic of the wavelength division multiplexed optical signal amplified by the optical amplifier in a relay apparatus on an optical transmission line on the basis of the tilt characteristic. In the technology described in Patent Literature 1, however, it may be impossible to keep the intensity of an output wavelength division multiplexed optical signal at a constant level. For example, when the intensity of a wavelength division multiplexed optical signal output from an optical amplifier is decreased without changing the tilt characteristic of the wavelength division multiplexed optical signal, the output of excitation light is not changed. As a result, it is impossible to keep the intensity of an output wavelength division multiplexed optical signal at a constant level because a gain in the amplifier is not changed even when the intensity of the wavelength division multiplexed optical signal output from the optical amplifier is decreased.

Patent Literature 2 discloses a technology of flattening the tilt characteristic of a wavelength division multiplexed optical signal by assigning an attenuation varying depending on a wavelength to the wavelength division multiplexed optical signal using a gain equalizer in a relay. In the technology described in Patent Literature 2, a wavelength division multiplexed optical signal is separated depending on a wavelength, and a varying attenuation is assigned to each separated signal, whereby the attenuation varying depending on the wavelength is assigned to flatten a tilt characteristic. In the technology described in Patent Literature 2, a plurality of variable attenuators are disposed in a relay in order to assign the attenuation varying depending on the wavelength, and therefore, the configuration of the relay is complicated. A wavelength division multiplexed optical signal may also be referred to as WDM (wavelength division multiplexing) signal.

### Citation List

### Patent Literature

Patent Literature 1: Japanese Unexamined Patent Application Publication No. 2011-9864
Patent Literature 2: Japanese Unexamined Patent Application Publication No. 2003-348017

### Summary of Invention

### Technical Problem

As described above, it is difficult to provide an optical equalizer configured to be capable of flattening the tilt characteristic of a wavelength division multiplexed optical signal with a simple configuration while keeping the optical signal intensity of the wavelength division multiplexed optical signal at a constant level.

An objective of the present disclosure is to provide an optical equalizer, a method, and a program which are configured to solve any of the problems described above.

### Solution to Problem

An optical equalizer according to the present disclosure includes:
a detection unit configured to detect a tilt characteristic, based on the intensities of at least two optical signals among a plurality of optical signals multiplexed into a wavelength division multiplexed optical signal;
an optical attenuation unit configured to attenuate an intensity of the wavelength division multiplexed optical signal by an optical attenuation amount; and
an optical amplification unit configured to amplify the attenuated wavelength division multiplexed optical signal, based on a gain characteristic associated with the intensity of the attenuated wavelength division multiplexed optical signal,
wherein the optical attenuation amount is controlled based on the tilt characteristic and the gain characteristic.

An optical equalizer according to the present disclosure includes:
an optical attenuation unit configured to attenuate an intensity of a wavelength division multiplexed optical signal by an optical attenuation amount;
an optical amplification unit configured to amplify the attenuated wavelength division multiplexed optical signal, based on a gain characteristic associated with an intensity of the attenuated wavelength division multiplexed optical signal; and
a detection unit configured to detect a tilt characteristic, based on the intensities of at least two optical signals among a plurality of optical signals multiplexed into the attenuated wavelength division multiplexed optical signal,
wherein the optical attenuation amount is controlled based on the tilt characteristic and the gain characteristic.

A method according to the present disclosure includes:
detecting a tilt characteristic, based on the intensities of at least two optical signals among a plurality of optical signals multiplexed into a wavelength division multiplexed optical signal;
attenuating the intensity of the wavelength division multiplexed optical signal by an optical attenuation amount;
amplifying the attenuated wavelength division multiplexed optical signal, based on a gain characteristic associated with an intensity of the attenuated wavelength division multiplexed optical signal; and
controlling the optical attenuation amount, based on the tilt characteristic and the gain characteristic.

A program according to the present disclosure, configured to cause a computer to execute:
detecting a tilt characteristic, based on the intensities of at least two optical signals among a plurality of optical signals multiplexed into a wavelength division multiplexed optical signal;
attenuating the intensity of the wavelength division multiplexed optical signal by an optical attenuation amount;
amplifying the attenuated wavelength division multiplexed optical signal, based on a gain characteristic associated with the intensity of the attenuated wavelength division multiplexed optical signal; and
controlling the optical attenuation amount, based on the tilt characteristic and the gain characteristic.

### Advantageous Effects of Invention

In accordance with the present disclosure, there can be provided an optical equalizer, a method, and a program which are configured to be capable of flattening the tilt characteristic of a wavelength division multiplexed optical signal with a simple configuration.

### Brief Description of Drawings

Fig. 1 is a block diagram illustrating an optical equalizer according to a first example embodiment;
Fig. 2 is a block diagram illustrating the optical equalizer according to the first example embodiment;
Fig. 3A is a view illustrating the gain characteristic of an optical amplification unit according to the first example embodiment;
Fig. 3B is a view illustrating the gain characteristic of the optical amplification unit according to the first example embodiment;
Fig. 3C is a view illustrating the gain characteristic of the optical amplification unit according to the first example embodiment;
Fig. 4A is a view illustrating the passage characteristic of an optical attenuation unit and the optical amplification unit according to the first example embodiment;
Fig. 4B is a view illustrating the passage characteristic of the optical attenuation unit and the optical amplification unit according to the first example embodiment;
Fig. 4C is a view illustrating the passage characteristic of an optical attenuation unit and the optical amplification unit according to the first example embodiment;
Fig. 5 is a flow chart illustrating the operation of a control unit according to the first example embodiment;
Fig. 6 is a block diagram illustrating the optical equalizer according to the first example embodiment;
Fig. 7 is a block diagram illustrating an optical equalizer according to Comparative Example of the first example embodiment; and
Fig. 8 is a block diagram illustrating an optical equalizer according to a second example embodiment.

### Description of Embodiments

Example embodiments of the present invention will be described below with reference to the drawings. The same or corresponding elements are denoted by the same reference characters in each drawing, and redundant descriptions thereof are omitted, if necessary, to clarify descriptions.

### [First Example Embodiment]

First, the outline of an optical equalizer according to a first example embodiment will be described.

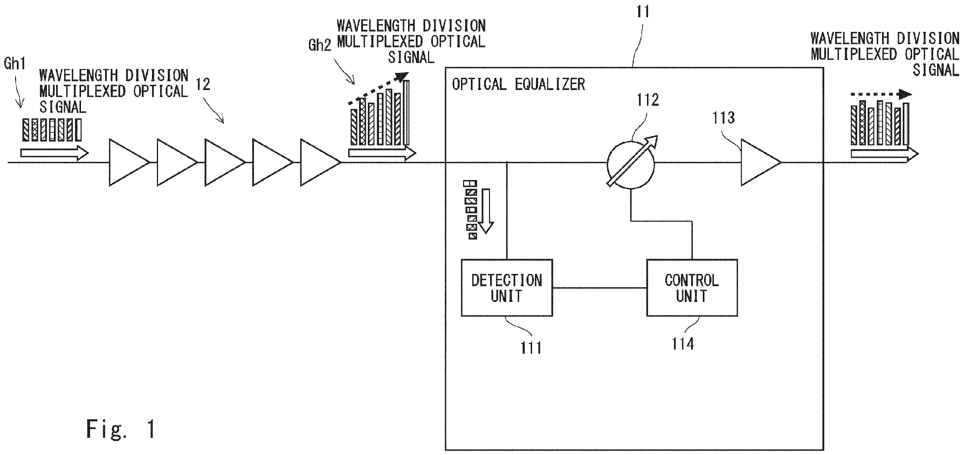

Fig. 1 is a block diagram illustrating an optical equalizer according to a first example embodiment.

Each of the abscissas of graphs Gh1 and Gh2 illustrated in Fig. 1 indicates a wavelength, and each of the ordinates thereof indicates an optical signal intensity.

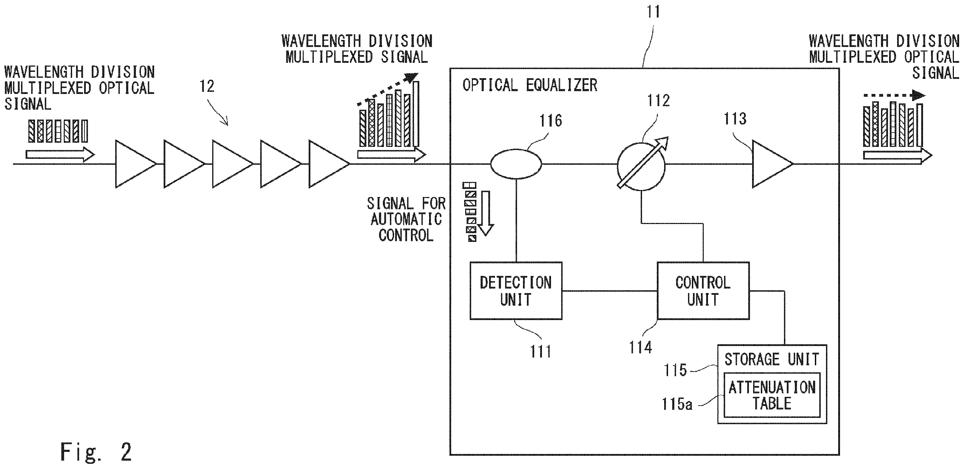

Fig. 2 is a block diagram illustrating the optical equalizer according to the first example embodiment.

The optical equalizer 11 includes a detection unit 111, an optical attenuation unit 112, an optical amplification unit 113, and a control unit 114, as illustrated in Fig. 1.

A wavelength division multiplexed optical signal obtained by performing wavelength division multiplex of a plurality of optical signals relayed by a relay apparatus 12 connected in a multistage manner is input into the optical equalizer 11. In a wavelength division multiplexed optical signal prior to the relay of the signal by the relay apparatus 12, the intensities of the optical signals having a plurality of wavelengths are substantially constant, and the tilt of the intensities is close to zero, as illustrated in the graph Gh1. In other words, the tilt characteristic thereof is flat. A tilt characteristic may also be simply referred to as "tilt". For example, the relay apparatus 12 includes an optical amplification unit configured to be capable of amplifying a wavelength division multiplexed optical signal.

In contrast, in the wavelength division multiplexed optical signal relayed by the relay apparatus 12, the intensities of the optical signals having the plurality of wavelengths are not constant, and are tilted, as illustrated in the graph Gh2. In other words, the tilt characteristic thereof is not flat.

The detection unit 111 detects the tilt characteristic representing the tilt of the optical signal intensities on the basis of the intensities of at least two optical signals of the plurality of optical signals multiplexed into the input wavelength division multiplexed optical signal. The detection unit 111 detects the tilt characteristic on the basis of, for example, the optical signal intensity of an optical signal having a minimum wavelength λ1 of the plurality of optical signals and the optical signal intensity of an optical signal having a maximum wavelength λ2 of the plurality of optical signals. The intensity of an optical signal is referred to as "optical signal intensity".

Specifically, first, the detection unit 111 determines, as an optical signal intensity difference, a difference between the optical signal intensity at the minimum wavelength λ1 and the optical signal intensity at the maximum wavelength λ2. Then, the detection unit 111 determines, as a wavelength difference, a difference between the minimum wavelength λ1 and the maximum wavelength λ2. Then, the detection unit 111 determines the tilt characteristic (tilt) of the wavelength division multiplexed optical signal by dividing the optical signal intensity difference by the wavelength difference.

The optical attenuation unit 112 attenuates the optical signal intensity of the wavelength division multiplexed optical signal by an optical attenuation amount. The optical attenuation unit may also be referred to as "VOA (variable optical attenuator) module".

The optical amplification unit 113 amplifies the wavelength division multiplexed optical signal attenuated by the optical attenuation unit 112. The optical amplification unit 113 is an optical amplification unit in which a gain characteristic is changed based on an attenuated optical signal intensity. In other words, the optical amplification unit 113 amplifies the attenuated wavelength division multiplexed optical signal on the basis of the gain characteristic depending on the intensity of the attenuated wavelength division multiplexed optical signal. The gain characteristic of the optical amplification unit 113 is a characteristic representing a gain for each of optical signals having a plurality of wavelengths. The gain may also be referred to as an amplification amount.

Moreover, the optical amplification unit 113 is excited by excitation light from an unillustrated excitation light source. The wavelength division multiplexed optical signal output from the optical amplification unit 113 is kept at a constant level by adjusting the intensity of the excitation light on the basis of the intensity of the wavelength division multiplexed optical signal output from the optical amplification unit 113.

The control unit 114 controls an optical attenuation amount set in the optical attenuation unit 112 on the basis of the tilt characteristic of the wavelength division multiplexed optical signal detected by the detection unit 111, and of the gain characteristic of the optical amplification unit 113. In other words, the control unit 114 sets, in the optical attenuation unit 112, the optical attenuation amount determined based on the tilt characteristic and the gain characteristic.

The optical equalizer 11 may further include an optical coupler 116 configured to branch part of the input wavelength division multiplexed optical signal, as illustrated in Fig. 2. The detection unit 111 detects a tilt characteristic from the part of the wavelength division multiplexed optical signal branched by the optical coupler 116. The branched part of the wavelength division multiplexed optical signal may also be referred to as "signal for automatic control".

The optical equalizer 11 may further include a storage unit 115. An attenuation table 115a in which the tilt characteristic of a wavelength division multiplexed optical signal, the gain characteristic of the optical amplification unit 113, and the optical attenuation amount of the optical attenuation unit 112 are associated with each other is stored in advance in the storage unit 115.

The tilt characteristic is detected by the detection unit 111. With reference to the attenuation table 115a, the control unit 114 determines the intensity of an optical signal input into the optical amplification unit 113, the intensity allowing the gain characteristic of the optical amplification unit 113 to be a characteristic opposite to the detected tilt characteristic. The control unit 114 determines an optical attenuation amount achieving the determined optical signal intensity, and sets the optical attenuation amount in the optical attenuation unit 112. In other words, the control unit 114 selects an optical attenuation amount from the attenuation table 115a on the basis of the tilt characteristic and the gain characteristic, and sets the selected optical attenuation amount in the optical attenuation unit 112. The optical attenuation unit 112 attenuates the optical signal intensity of the wavelength division multiplexed optical signal by the selected optical attenuation amount.

In the setting of the optical attenuation amount, a difference between the determined optical signal intensity and a reference intensity set in advance may be determined as the optical attenuation amount.

In the setting of the optical attenuation amount, a difference between the determined optical signal intensity and the intensity of an optical signal input into the optical attenuation unit 112 may be determined as the optical attenuation amount. In such a case, the intensity of the optical signal input into the optical attenuation unit 112 is determined by, for example, allowing the detection unit 111 to detect the intensity of the wavelength division multiplexed optical signal input into the detection unit 111.

The optical equalizer 11 according to the first example embodiment controls the optical attenuation amount of the optical attenuation unit 112 set in the preceding stage of the optical amplification unit 113 on the basis of the tilt characteristic of the wavelength division multiplexed optical signal and the gain characteristic of the optical amplification unit 113. As a result, in the optical equalizer 11, the number of components can be reduced, and, in addition, a wavelength division multiplexed optical signal having a flattened tilt characteristic can be output, in comparison with an apparatus including a plurality of variable attenuators for assigning an attenuation varying depending on each of optical signals having a plurality of wavelengths.

As a result, there can be provided an optical equalizer configured to be capable of flattening the tilt characteristic of a wavelength division multiplexed optical signal with a simple configuration.

The optical equalizer 11, of which the number is one, is capable of flattening the intensities of optical signals having a plurality of wavelength in a wavelength division multiplexed optical signal. As a result, the number of optical equalizers 11 in a multicore system can be reduced, and the price of the system can be reduced.

Moreover, the optical equalizer 11 can automatically flatten the intensities of optical signals having a plurality of wavelengths in a wavelength division multiplexed optical signal. As a result, a tilt characteristic in building of, or after laying of a system can be automatically adjusted, operation steps are therefore simplified and reduced, and therefore, a cost can be reduced.

The details of the optical equalizer according to the first example embodiment will now be described.

### <Gain Characteristic of Optical Amplification Unit>

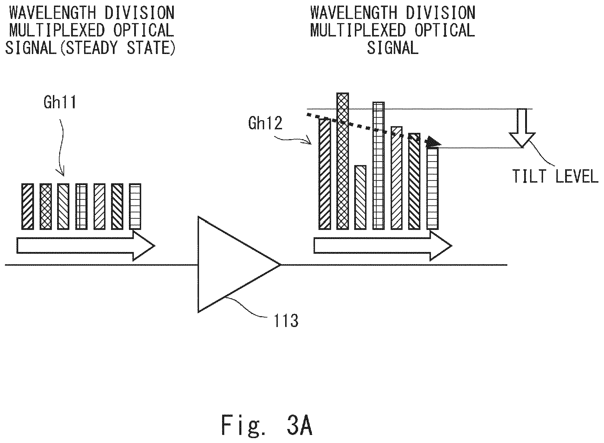

Fig. 3A is a view illustrating the gain characteristic of the optical amplification unit according to the first example embodiment.

Fig. 3A illustrates the gain characteristic in a case in which the optical signal intensity of the input wavelength division multiplexed optical signal is moderate.

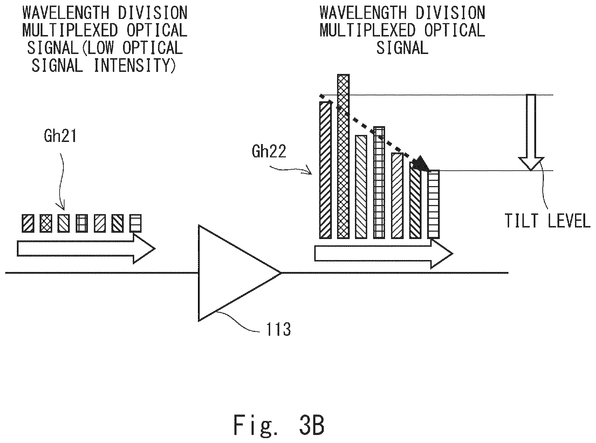

Fig. 3B is a view illustrating the gain characteristic of the optical amplification unit according to the first example embodiment.

Fig. 3B illustrates the gain characteristic in a case in which the optical signal intensity of the input wavelength division multiplexed optical signal is low.

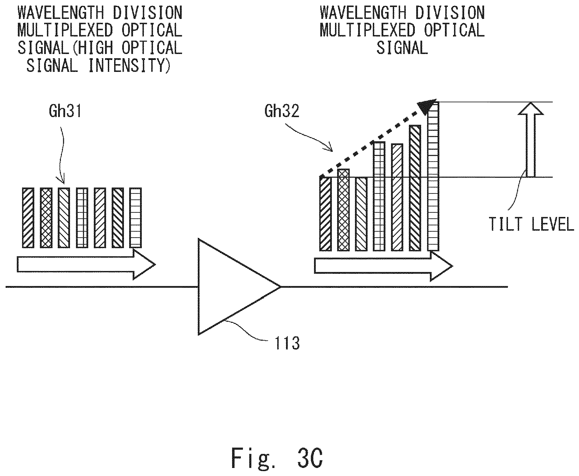

Fig. 3C is a view illustrating the gain characteristic of the optical amplification unit according to the first example embodiment.

Fig. 3C illustrates the gain characteristic in a case in which the optical signal intensity of the input wavelength division multiplexed optical signal is high.

The abscissa and ordinate of each of graphs Gh11, Gh12, Gh21, Gh22, Gh311, and Gh32 indicate a wavelength and an optical signal intensity, respectively.

As illustrated in Fig. 3A, in the case of inputting a wavelength division multiplexed optical signal of which the optical signal intensity is in a steady state (moderate) (see the graph Gh11) into the optical amplification unit 113, the optical signal intensity of the wavelength division multiplexed optical signal output from the optical amplification unit 113 is illustrated in the graph Gh12. The tilt, i.e., tilt characteristic of the optical signal intensity of the output wavelength division multiplexed optical signal has a negative value. As described above, the optical amplification unit 113 has a gain characteristic in that a gain at the minimum wavelength λ1 is more than a gain at the maximum wavelength λ2 in a case in which the optical signal intensity of a wavelength division multiplexed optical signal, which is attenuated by the optical attenuation unit 112, and is input, is less than a predetermined optical signal intensity.

Moreover, when a value obtained by subtracting the intensity of the optical signal having the maximum wavelength λ2 from the intensity of the optical signal having the minimum wavelength λ1, of the optical signals having the plurality of wavelengths, is a negative value, a tilt level is regarded as negative. In the graph Gh12, the tilt level is negative.

As illustrated in Fig. 3B, when a wavelength division multiplexed optical signal of which the optical signal intensity is less than that in the steady state (see the graph Gh21) is input into the optical amplification unit 113, the optical signal intensity of the wavelength division multiplexed optical signal output from the optical amplification unit 113 is as illustrated in the graph Gh22. The tilt, i.e., tilt characteristic of the optical signal intensity of the output wavelength division multiplexed optical signal is a highly negative value in comparison with that in the graph Gh12. The tilt level thereof is higher in a negative direction.

As illustrated in Fig. 3C, when a wavelength division multiplexed optical signal of which the optical signal intensity is more than that in the steady state (see the graph Gh31) is input into the optical amplification unit 113, the optical signal intensity of the wavelength division multiplexed optical signal output from the optical amplification unit 113 is as illustrated in the graph Gh32. The tilt, i.e., tilt characteristic of the optical signal intensity of the output wavelength division multiplexed optical signal is a positive value. Moreover, the tilt level thereof is positive. As described above, the optical amplification unit 113 has a gain characteristic in that a gain at the minimum wavelength λ1 is less than a gain at the maximum wavelength λ2 in a case in which the optical signal intensity of the wavelength division multiplexed optical signal, which is attenuated by the optical attenuation unit 112, and is input, is more than a predetermined optical signal intensity.

The tilt characteristic (tilt) of the optical signal intensity of a wavelength division multiplexed optical signal output from the optical amplification unit 113 can be changed by changing the optical signal intensity of a wavelength division multiplexed optical signal input into the optical amplification unit 113, as illustrated in Figs. 3A to 3C. In other words, the tilt level thereof can be changed.

### <Passage Characteristic of Optical Attenuation Unit and Optical Amplification Unit>

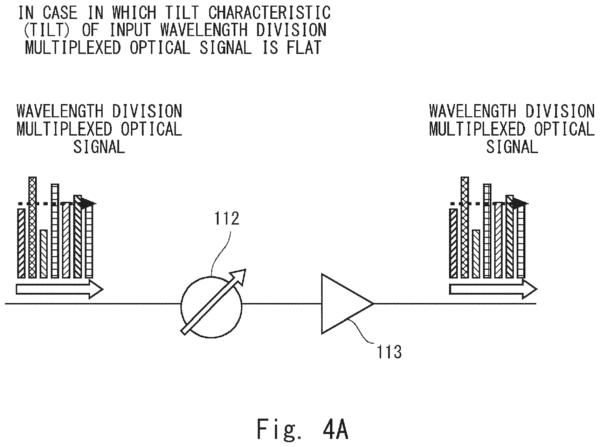

Fig. 4A is a view illustrating the passage characteristic of an optical attenuation unit and the optical amplification unit according to the first example embodiment.

Fig. 4A illustrates the passage characteristic based on the optical equalizer 11 according to the first example embodiment in a case in which the tilt characteristic of the optical signal intensity of an input wavelength division multiplexed optical signal is flat.

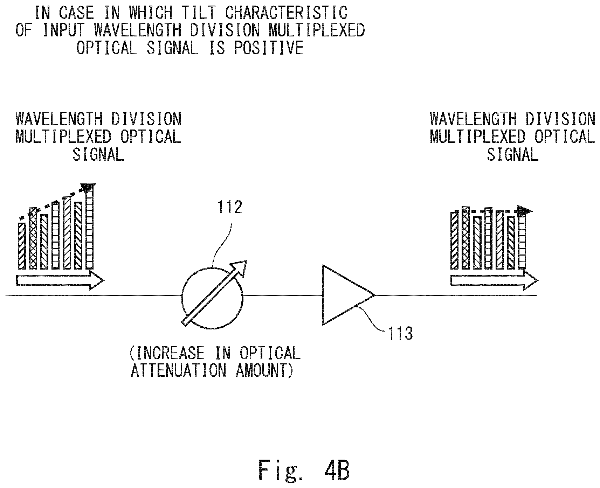

Fig. 4B is a view illustrating the passage characteristic of the optical attenuation unit and the optical amplification unit according to the first example embodiment.

Fig. 4B illustrates the passage characteristic based on the optical equalizer 11 according to the first example embodiment in a case in which the tilt characteristic of the optical signal intensity of an input wavelength division multiplexed optical signal is positive.

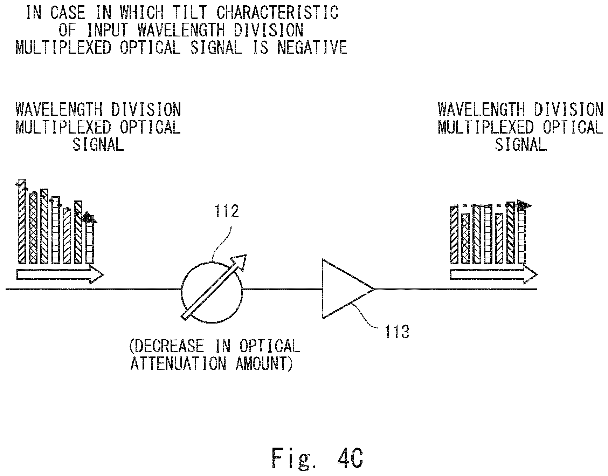

Fig. 4C is a view illustrating the passage characteristic of an optical attenuation unit and the optical amplification unit according to the first example embodiment.

Fig. 4C illustrates the passage characteristic based on the optical equalizer 11 according to the first example embodiment in a case in which the tilt characteristic of the optical signal intensity of an input wavelength division multiplexed optical signal is negative.

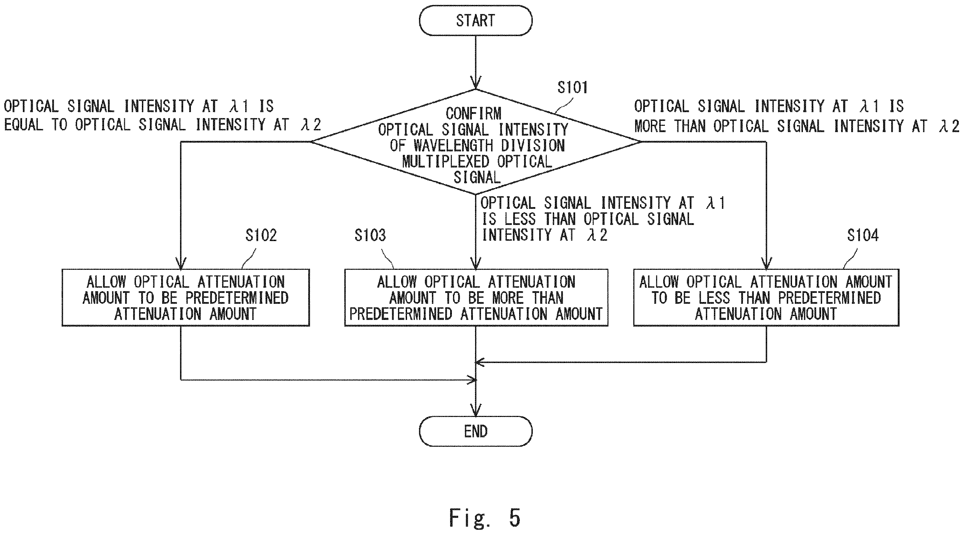

Fig. 5 is a flow chart illustrating the operation of the control unit according to the first example embodiment.

As illustrated in Fig. 4A, when the tilt characteristic of the optical signal intensity of a wavelength division multiplexed optical signal input into the optical attenuation unit 112 is flat, the control unit 114 controls an optical attenuation amount set in the optical attenuation unit 112 so that the tilt characteristic (tilt) of a wavelength division multiplexed optical signal output from the optical amplification unit 113 is flat.

Specifically, as illustrated in Fig. 5, the control unit 114 confirms the intensity of an optical signal having a minimum wavelength λ1 and the intensity of an optical signal having a maximum wavelength λ2, of a plurality of optical signals multiplexed into a wavelength division multiplexed optical signal (step S101). When the intensity of the optical signal having the minimum wavelength λ1 of the plurality of optical signals multiplexed into the wavelength division multiplexed optical signal is equal to the intensity of the optical signal having the maximum wavelength λ2 of the plurality of optical signals, the control unit 114 allows an optical attenuation amount to be a predetermined optical attenuation amount (step S102).

The control unit 114 varies the tilt of the optical signal intensity of the wavelength division multiplexed optical signal output from the optical amplification unit 113 on the basis of the optical attenuation amount (predetermined attenuation amount) set in such a case.

When the tilt characteristic of the optical signal intensity of the wavelength division multiplexed optical signal input into the optical attenuation unit 112 is positive as illustrated in Fig. 4B, the tilt characteristic (tilt) of the wavelength division multiplexed optical signal output from the optical amplification unit 113 is preferably set to be negative as illustrated in Fig. 3B. Thus, the control unit 114 allows the optical attenuation amount set in the optical attenuation unit 112 to be more than a reference optical attenuation amount.

Specifically, when the intensity of the optical signal having the minimum wavelength λ1 of the plurality of optical signals multiplexed into the wavelength division multiplexed optical signal is less than the intensity of the optical signal having the maximum wavelength λ2 of the plurality of optical signals, the control unit 114 allows the optical attenuation amount to be more than the predetermined optical attenuation amount (step S103), as illustrated in Fig. 5.

As a result, the tilt characteristic of the optical signal intensity of the wavelength division multiplexed optical signal output from the optical amplification unit 113 can be allowed to be flat.

When the tilt characteristic of the optical signal intensity of the wavelength division multiplexed optical signal input into the optical attenuation unit 112 is negative as illustrated in Fig. 4C, the tilt characteristic (tilt) of the wavelength division multiplexed optical signal output from the optical amplification unit 113 is preferably set to be positive, as illustrated in Fig. 3C. Thus, the control unit 114 allows the optical attenuation amount set in the optical attenuation unit 112 to be less than the reference optical attenuation amount.

Specifically, when the intensity of the optical signal having the minimum wavelength λ1 of the plurality of optical signals multiplexed into the wavelength division multiplexed optical signal is more than the intensity of the optical signal having the maximum wavelength λ2 of the plurality of optical signals, the control unit 114 allows the optical attenuation amount to be less than the predetermined optical attenuation amount (step S104), as illustrated in Fig. 5.

As a result, the tilt characteristic of the optical signal intensity of the wavelength division multiplexed optical signal output from the optical amplification unit 113 can be allowed to be flat.

The operation of the optical equalizer according to the first example embodiment will now be described.

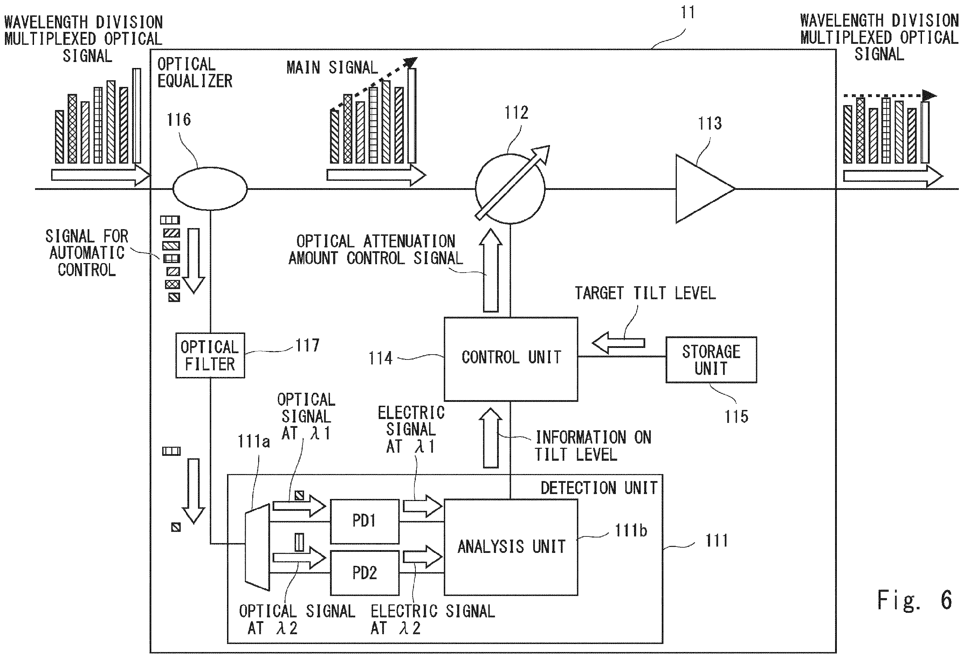

Fig. 6 is a block diagram illustrating the optical equalizer according to the first example embodiment.

As illustrated in Fig. 6, the wavelength division multiplexed optical signal input into the optical equalizer 11 is separated into a main signal and a signal for automatic control by the optical coupler 116. The signal for automatic control may also be referred to as "part of wavelength division multiplexed optical signal".

The signal for automatic control passes through an optical filter 117, whereby only the optical signal having the minimum wavelength λ1 of the plurality of optical signals multiplexed into the wavelength division multiplexed optical signal and the optical signal having the maximum wavelength λ2 of the plurality of optical signals are extracted to pass therethrough. The optical filter may also be referred to as "band-pass filter".

The optical signal obtained by extracting only the optical signal having the minimum wavelength λ1 and the optical signal having the maximum wavelength λ2 are branched into the optical signal having the minimum wavelength λ1 and the optical signal having the maximum wavelength λ2 by a wavelength branch device 111a. Examples of the wavelength branch device 111a include AWG (array waveguide gratings) and OADM (optical add-drop multiplexer) filters.

The optical signal having the minimum wavelength λ1 is converted into an electric signal by a photodiode PD1, and is transmitted to an analysis unit 111b. The optical signal having the maximum wavelength λ2 is converted into an electric signal by a photodiode PD2, and is transmitted to the analysis unit 111b. The detection unit 111 includes the wavelength branch device 111a, the analysis unit 111b, the photodiode PD1, and the photodiode PD2.

The analysis unit 111b compares the optical signal intensity of the optical signal having the minimum wavelength λ1 and the optical signal intensity of the optical signal having the maximum wavelength λ2 to calculate the tilt level of the optical input signal. In other words, the analysis unit 111b calculates the tilt characteristic from the wavelength division multiplexed optical signal that has passed through the optical filter 117. The analysis unit 111b transmits information on the calculated tilt level of the optical input signal to the control unit 114.

The control unit 114 compares information on a target tilt level stored in the storage unit 115 in advance and information on the calculated tilt level of the optical input signal. The control unit 114 determines the optical attenuation amount of the optical attenuation unit 112 on the basis of the compared result.

In other words, the control unit 114 determines the optical attenuation amount so that the tilt characteristic of the wavelength division multiplexed optical signal of the main signal that has been amplified by the optical amplification unit 113 is within the range of the target tilt level (within a predetermined tilt range).

The control unit 114 controls the optical attenuation amount by transmitting an optical attenuation amount control signal including the determined optical attenuation amount to the optical attenuation unit 112.

As a result, the optical signal intensity of the main signal input into the optical amplification unit 113 is varied. The main signal of which the optical signal intensity is varied is input into the optical amplification unit 113, whereby the tilt level (tilt characteristic) of the wavelength division multiplexed optical signal output from the optical amplification unit 113 is varied, converges to the target tilt level, and becomes flat.

Moreover, the optical equalizer 11 allows the optical attenuation unit 112 to flatten a tilt, therefor eliminates the need for finely controlling the output of the excitation light source in comparison with a case in which a tilt is flattened by the excitation light source of the optical amplification unit 113, and therefor enables breakage of the excitation light source to be suppressed.

### [Comparative Example]

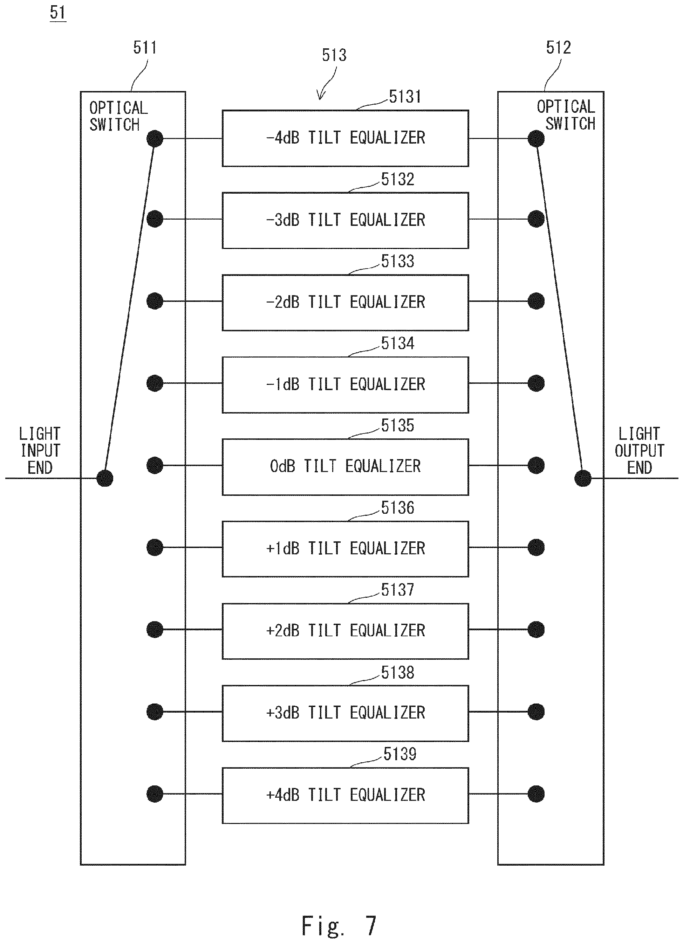

Fig. 7 is a block diagram illustrating an optical equalizer according to Comparative Example of the first example embodiment.

The optical equalizer 51 according to Comparative Example includes an optical switch 511, an optical switch 512, and tilt equalizers 513, as illustrated in Fig. 7. The tilt equalizers 513 include, for example, a plurality of -4 dB (decibel) to +4 dB (decibels) tilt equalizers 5131 to 5139. The optical equalizer 51 may also referred to as "variable tilt equalizer apparatus".

The optical equalizer 51 adjusts a tilt level by switching the tilt equalizer 513 using the optical switch 511 and the optical switch 512. It is difficult to downsize the optical equalizer 51 because an increase in the adjustable range of a tilt level results in an increase in the number of the tilt equalizers 513.

As a result, it is difficult to provide an optical equalizer configured to be capable of flattening the tilt characteristic of a wavelength division multiplexed optical signal with a simple configuration.

### [Second Example Embodiment]

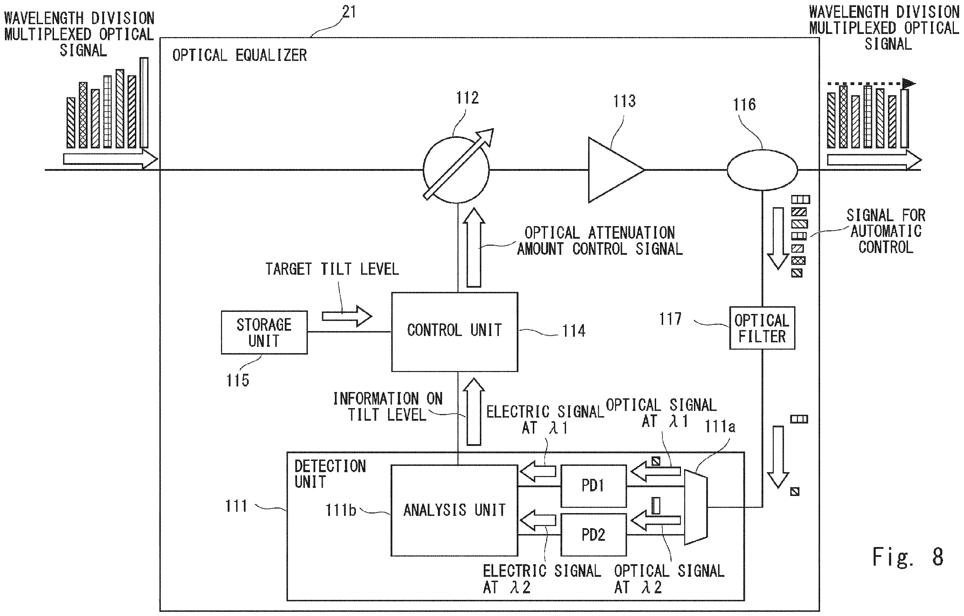

Fig. 8 is a block diagram illustrating an optical equalizer according to a second example embodiment.

As illustrated in Fig. 8, the optical equalizer 21 according to the second example embodiment differs from the optical equalizer 11 according to the first example embodiment in that a signal for automatic control is separated with a wavelength division multiplexed optical signal output from an optical amplification unit 113. Therefore, an optical coupler 116, which is mounted for the output from the optical amplification unit 113, separates a main signal and the signal for automatic control.

The optical equalizer 21 according to the second example embodiment includes an optical attenuation unit 112, the optical amplification unit 113, a detection unit 111, and a control unit 114.

The optical attenuation unit 112 attenuates the intensity of a wavelength division multiplexed optical signal input into the optical equalizer 21 by an optical attenuation amount.

In the optical amplification unit 113, a gain characteristic is changed based on the intensity of the wavelength division multiplexed optical signal attenuated by the optical attenuation unit 112. The optical amplification unit 113 amplifies the attenuated wavelength division multiplexed optical signal on the basis of the gain characteristic based on the intensity of the wavelength division multiplexed optical signal attenuated by the optical attenuation unit 112.

The detection unit 111 detects the tilt characteristic (tilt) of an optical signal intensity on the basis of the intensities of at least two optical signals of a plurality of optical signals multiplexed into the wavelength division multiplexed optical signal that has been amplified by the optical amplification unit 113.

The control unit 114 controls an optical attenuation amount set in the optical attenuation unit 112 on the basis of the tilt characteristic detected by the detection unit 111 and of the gain characteristic of the optical amplification unit 113.

The details of the optical equalizer 21 will be described.

The wavelength division multiplexed optical signal that has been attenuated by the optical attenuation unit 112 and has been amplified by the optical amplification unit 113 is separated into a main signal and a signal for automatic control by the optical coupler 116.

The separated signal for automatic control passes through an optical filter 117, whereby only an optical signal having a minimum wavelength λ1 of the plurality of optical signals included in the wavelength division multiplexed optical signal and an optical signal having a maximum wavelength λ2 of the plurality of optical signals are extracted.

The optical signal in which only the optical signal having the minimum wavelength λ1 and the optical signal having the maximum wavelength λ2 are extracted is branched into the optical signal having the minimum wavelength λ1 and the optical signal having the maximum wavelength λ2 by a wavelength branch device 111a.

The optical signal having the minimum wavelength λ1 is converted into an electric signal by a photodiode PD1, and is transmitted to an analysis unit 111b. The optical signal having the maximum wavelength λ2 is converted into an electric signal by a photodiode PD2, and is transmitted to the analysis unit 111b.

The analysis unit 111b compares the optical signal intensity of the optical signal having the minimum wavelength λ1 and the optical signal intensity of the optical signal having the maximum wavelength λ2 to calculate the tilt level of the optical input signal. The analysis unit 111b transmits information on the calculated tilt level of the optical input signal to the control unit 114.

The control unit 114 compares information on a target tilt level stored in the storage unit 115 in advance and information on the calculated tilt level of the optical input signal. The control unit 114 determines the optical attenuation amount of the optical attenuation unit 112 on the basis of the compared result. The control unit 114 controls the optical attenuation amount by transmitting the optical attenuation amount control signal including the determined optical attenuation amount to the optical attenuation unit 112.

As a result, the optical signal intensity of the wavelength division multiplexed optical signal input into the optical amplification unit 113 is varied. The wavelength division multiplexed optical signal of which the optical signal intensity is varied is input into the optical amplification unit 113, whereby the tilt level (tilt characteristic) of the wavelength division multiplexed optical signal output from the optical amplification unit 113 is varied, converges to the target tilt level, and becomes flat.

In the example embodiments described above, the present invention has been described as the hardware configurations. However, the present invention is not limited thereto. In the present invention, the process of each component can also be achieved by allowing a CPU (central processing unit) to execute a computer program.

In the example embodiments described above, the program is stored using various types of non-transitory computer-readable media, and can be supplied to the computer. The non-transitory computer-readable media include various types of tangible storage media. Examples of the non-transitory computer-readable media include magnetic recording media (specifically, flexible disks, magnetic tapes, and hard disk drives), magneto-optical recording media (specifically, magneto-optical disks), CD-ROMs (read only memories), CD-Rs, CD-R/Ws, semiconductor memories (specifically, mask ROMs, PROMs (programmable ROMs), and EPROMs (erasable PROMs)), flash ROMs, and RAMs (random access memories). The program may also be supplied to the computer by various types of transitory computer-readable media. Examples of the transitory computer-readable media include electric signals, optical signals, and electromagnetic waves. The transitory computer-readable media enables the program to be supplied to the computer through a wired communication channel such as an electric wire or an optical fiber, or a radio channel.

The present invention is not limited to the example embodiments described above, but can be modified as appropriate without departing from the gist of the present invention.

Some or all of the example embodiments described above can also be described as in the following Supplementary Notes but are not limited thereto.

### (Supplementary Note 1)

An optical equalizer including:
a detection unit for detecting a tilt characteristic, based on intensities of at least two optical signals among a plurality of optical signals multiplexed into a wavelength division multiplexed optical signal;
an optical attenuation unit for attenuating an intensity of the wavelength division multiplexed optical signal by an optical attenuation amount; and
an optical amplification unit for amplifying the attenuated wavelength division multiplexed optical signal, based on a gain characteristic associated with an intensity of the attenuated wavelength division multiplexed optical signal,
wherein the optical attenuation amount is controlled based on the tilt characteristic and the gain characteristic.

### (Supplementary Note 2)

The optical equalizer according to Supplementary Note 1, wherein the detection unit detects the tilt characteristic, based on an intensity of an optical signal having a minimum wavelength among the plurality of optical signals and an intensity of an optical signal having a maximum wavelength among the plurality of optical signals.

### (Supplementary Note 3)

The optical equalizer according to Supplementary Note 2, wherein the optical amplification unit includes the gain characteristic, in which
a gain at the minimum wavelength is more than a gain at the maximum wavelength when an intensity of the attenuated wavelength division multiplexed optical signal is lower than a predetermined optical signal intensity, and
the gain at the minimum wavelength is less than the gain at the maximum wavelength when the intensity of the attenuated wavelength division multiplexed optical signal is more than the predetermined optical signal intensity.

### (Supplementary Note 4)

The optical equalizer according to Supplementary Note 3, wherein
the optical attenuation amount is controlled to be more than a predetermined optical attenuation amount when an intensity of an optical signal having a minimum wavelength among the plurality of optical signals is less than an intensity of an optical signal having a maximum wavelength among the plurality of optical signals,
the optical attenuation amount is controlled to be equal to the predetermined optical attenuation amount when an intensity of an optical signal having a minimum wavelength among the plurality of optical signals is equal to an intensity of an optical signal having a maximum wavelength among the plurality of optical signals, and
the optical attenuation amount is controlled to be less than the predetermined optical attenuation amount when the intensity of an optical signal having a minimum wavelength among the plurality of optical signals is more than an intensity of an optical signal having a maximum wavelength among the plurality of optical signals.

### (Supplementary Note 5)

The optical equalizer according to any one of Supplementary Notes 1 to 4, further including a control unit configured to control the optical attenuation amount, based on the tilt characteristic and the gain characteristic,
wherein the control unit controls the optical attenuation amount in such a way that the tilt characteristic of the amplified wavelength division multiplexed optical signal is in a predetermined tilt range.

### (Supplementary Note 6)

The optical equalizer according to Supplementary Note 5, further including a storage unit configured to store an attenuation table in which the tilt characteristic, the gain characteristic, and the optical attenuation amount are associated with one another, wherein
the control unit selects the optical attenuation amount from the attenuation table, based on the tilt characteristic and the gain characteristic, and sets the selected optical attenuation amount in the optical attenuation unit, and
the optical attenuation unit attenuates an intensity of the wavelength division multiplexed optical signal by the selected optical attenuation amount.

### (Supplementary Note 7)

The optical equalizer according to any one of Supplementary Notes 1 to 6, further including an optical coupler configured to branch a part of the wavelength division multiplexed optical signal,
wherein the detection unit detects the tilt characteristic from the part of the wavelength division multiplexed optical signal.

### (Supplementary Note 8)

The optical equalizer according to any one of Supplementary Notes 1 to 7, further including an optical filter through which an optical signal having a minimum wavelength among the plurality of optical signals and an optical signal having a maximum wavelength among the plurality of optical signals pass,
wherein the detection unit detects the tilt characteristic from the wavelength division multiplexed optical signal that has passed through the optical filter.

### (Supplementary Note 9)

An optical equalizer including:
an optical attenuation unit configured to attenuate an intensity of a wavelength division multiplexed optical signal by an optical attenuation amount;
an optical amplification unit configured to amplify the attenuated wavelength division multiplexed optical signal, based on a gain characteristic associated with an intensity of the attenuated wavelength division multiplexed optical signal; and
a detection unit configured to detect a tilt characteristic, based on intensities of at least two optical signals among a plurality of optical signals multiplexed into the attenuated wavelength division multiplexed optical signal,
wherein the optical attenuation amount is controlled based on the tilt characteristic and the gain characteristic.

### (Supplementary Note 10)

A method including:
detecting a tilt characteristic, based on intensities of at least two optical signals among a plurality of optical signals multiplexed into a wavelength division multiplexed optical signal;
attenuating an intensity of the wavelength division multiplexed optical signal by an optical attenuation amount;
amplifying the attenuated wavelength division multiplexed optical signal, based on a gain characteristic associated with an intensity of the attenuated wavelength division multiplexed optical signal; and
controlling the optical attenuation amount, based on the tilt characteristic and the gain characteristic.

### (Supplementary Note 11)

A program configured to cause a computer to execute:
detecting a tilt characteristic, based on intensities of at least two optical signals among a plurality of optical signals multiplexed into a wavelength division multiplexed optical signal;
attenuating an intensity of the wavelength division multiplexed optical signal by an optical attenuation amount;
amplifying the attenuated wavelength division multiplexed optical signal, based on a gain characteristic associated with an intensity of the attenuated wavelength division multiplexed optical signal; and
controlling the optical attenuation amount, based on the tilt characteristic and the gain characteristic.

The present invention has been described above with reference to the example embodiments. However, the present invention is not limited to the above description. Various modifications that can be understood by those skilled in the art in the scope of the present invention can be made in the constitution and details of the present invention.

This application claims priority based on Japanese Patent Application No. 2019-056829, which was filed on March 25, 2019, and of which the entire disclosure is incorporated herein.

### Reference Signs List

11, 21, 51 OPTICAL EQUALIZER
111 DETECTION UNIT
111a WAVELENGTH BRANCH DEVICE
111b ANALYSIS UNIT
112 OPTICAL ATTENUATION UNIT
113 OPTICAL AMPLIFICATION UNIT
114 CONTROL UNIT
115 STORAGE UNIT
115a ATTENUATION TABLE
116 OPTICAL COUPLER
117 OPTICAL FILTER
12 RELAY APPARATUS
511, 512 OPTICAL SWITCH
513 TILT EQUALIZER
PD1, PD2 PHOTODIODE
Gh1, Gh2, Gh11, Gh12, Gh21, Gh22, Gh31, Gh32 GRAPH

## Claims

1. An optical equalizer comprising:
detection means for detecting a tilt characteristic, based on intensities of at least two optical signals among a plurality of optical signals multiplexed into a wavelength division multiplexed optical signal;
optical attenuation means for attenuating an intensity of the wavelength division multiplexed optical signal by an optical attenuation amount; and
optical amplification means for amplifying the attenuated wavelength division multiplexed optical signal, based on a gain characteristic associated with an intensity of the attenuated wavelength division multiplexed optical signal,
wherein the optical attenuation amount is controlled based on the tilt characteristic and the gain characteristic.

2. The optical equalizer according to Claim 1, wherein the detection means detects the tilt characteristic, based on an intensity of an optical signal having a minimum wavelength among the plurality of optical signals and an intensity of an optical signal having a maximum wavelength among the plurality of optical signals.

3. The optical equalizer according to Claim 2, wherein the optical amplification means includes the gain characteristic, in which
a gain at the minimum wavelength is more than a gain at the maximum wavelength when an intensity of the attenuated wavelength division multiplexed optical signal is lower than a predetermined optical signal intensity, and
the gain at the minimum wavelength is less than the gain at the maximum wavelength when the intensity of the attenuated wavelength division multiplexed optical signal is more than the predetermined optical signal intensity.

4. The optical equalizer according to Claim 3, wherein
the optical attenuation amount is controlled to be more than a predetermined optical attenuation amount when an intensity of an optical signal having a minimum wavelength among the plurality of optical signals is less than an intensity of an optical signal having a maximum wavelength among the plurality of optical signals,
the optical attenuation amount is controlled to be equal to the predetermined optical attenuation amount when an intensity of an optical signal having a minimum wavelength among the plurality of optical signals is equal to an intensity of an optical signal having a maximum wavelength among the plurality of optical signals, and
the optical attenuation amount is controlled to be less than the predetermined optical attenuation amount when an intensity of an optical signal having a minimum wavelength among the plurality of optical signals is more than an intensity of an optical signal having a maximum wavelength among the plurality of optical signals.

5. The optical equalizer according to any one of Claims 1 to 4, further comprising control means for controlling the optical attenuation amount, based on the tilt characteristic and the gain characteristic,
wherein the control means controls the optical attenuation amount in such a way that the tilt characteristic of the amplified wavelength division multiplexed optical signal is in a predetermined tilt range.

6. The optical equalizer according to Claim 5, further comprising storage means for storing an attenuation table in which the tilt characteristic, the gain characteristic, and the optical attenuation amount are associated with one another, wherein
the control means selects the optical attenuation amount from the attenuation table, based on the tilt characteristic and the gain characteristic, and sets the selected optical attenuation amount in the optical attenuation means, and
the optical attenuation means attenuates an intensity of the wavelength division multiplexed optical signal by the selected optical attenuation amount.

7. The optical equalizer according to any one of Claims 1 to 6, further comprising an optical coupler configured to branch a part of the wavelength division multiplexed optical signal,
wherein the detection means detects the tilt characteristic from the part of the wavelength division multiplexed optical signal.

8. The optical equalizer according to any one of Claims 1 to 7, further comprising an optical filter through which an optical signal having a minimum wavelength among the plurality of optical signals and an optical signal having a maximum wavelength among the plurality of optical signals pass,
wherein the detection means detects the tilt characteristic from the wavelength division multiplexed optical signal that has passed through the optical filter.

9. An optical equalizer comprising:
optical attenuation means for attenuating an intensity of a wavelength division multiplexed optical signal by an optical attenuation amount;
optical amplification means for amplifying the attenuated wavelength division multiplexed optical signal, based on a gain characteristic associated with an intensity of the attenuated wavelength division multiplexed optical signal; and
detection means for detecting a tilt characteristic, based on intensities of at least two optical signals among a plurality of optical signals multiplexed into the attenuated wavelength division multiplexed optical signal,
wherein the optical attenuation amount is controlled based on the tilt characteristic and the gain characteristic.

10. A method comprising:
detecting a tilt characteristic, based on intensities of at least two optical signals among a plurality of optical signals multiplexed into a wavelength division multiplexed optical signal;
attenuating an intensity of the wavelength division multiplexed optical signal by an optical attenuation amount;
amplifying the attenuated wavelength division multiplexed optical signal, based on a gain characteristic associated with an intensity of the attenuated wavelength division multiplexed optical signal; and
controlling the optical attenuation amount, based on the tilt characteristic and the gain characteristic.

11. A non-transitory computer-readable medium storing a program configured to cause a computer to execute:
detecting a tilt characteristic, based on intensities of at least two optical signals among a plurality of optical signals multiplexed into a wavelength division multiplexed optical signal;
attenuating an intensity of the wavelength division multiplexed optical signal by an optical attenuation amount;
amplifying the attenuated wavelength division multiplexed optical signal, based on a gain characteristic associated with an intensity of the attenuated wavelength division multiplexed optical signal; and
controlling the optical attenuation amount, based on the tilt characteristic and the gain characteristic.
